# EUROPEAN PATENT APPLICATION

(11) **EP 2 722 105 A1**
(43) Date of publication of application: **23.04.2014**
(21) Application number: 12189396.0
(22) Date of filing: 22.10.2012
(51) Int. Cl.: B01J 19/00

(54) **Method of in situ synthesizing microarrays**

(71) Applicant: Universität Wien, 1010 Wien (AT)
(72) Inventor: Somoza, Mark, 3400 Weidling (AT); Somoza, Veronika, 3400 Weidling (AT)
(74) Representative: Sonn & Partner Patentanwälte

(57) **Abstract**

The invention provides a method of step-wise synthesizing copies of polymers of potentially different units on at least two solid carrier surfaces simultaneously in a preselected pattern, comprising providing a layered synthesis arrangement comprising a transparent first solid carrier and a second solid carrier, wherein said first and second carrier each contain an active surface to which polymer units can be applied dependent on reactions of photosensitive moieties, projecting light in a preselected pattern onto the first and second carrier surface, wherein the light passes through the transparent first solid carrier, whereby photons react with photosensitive moieties thereby activating the first surface, said pass-through light further projects onto the second carrier surface, whereby photons react with photosensitive moieties thereby activating the second surface, applying a fluid comprising a polymer unit to the first and second active surfaces and binding the polymer unit to the exposed sites of said pattern, repeating projecting and binding steps with optionally different patterns and/or polymer units, thereby synthesising polymers on said carrier surfaces; as well as means for performing said method.

## Description

The invention relates to the generation of molecular microarrays, such as DNA microarrays or peptide microarrays.

Microarrays have become established as practical high-throughput experimental tools in multiple fields of biology. Most microarrays are DNA microarrays, but microarrays for other biological macromolecules, such as RNA, proteins and carbohydrates, exist. One of the most successful and practical synthesis methods for the fabrication of microarrays at both commercial and laboratory scale is in situ, light-directed synthesis. The basic technology is inspired by the photolithographic process that is used to make silicon microchips. The monomer building blocks of the biological macromolecules to be included on the microarray are synthesized with a light-sensitive group, which drops off when illuminated, leaving a reactive site to which the next monomer can couple. By combining coupling chemistry and light exposure, very complex microarrays can be synthesized. Microarrays are currently available with up to 2.1 million different DNA sequences per array. The same technology has been applied to the synthesis of proteins, RNA, and carbohydrate microarrays, but DNA microarrays represent the commercially dominant form and are widely used.

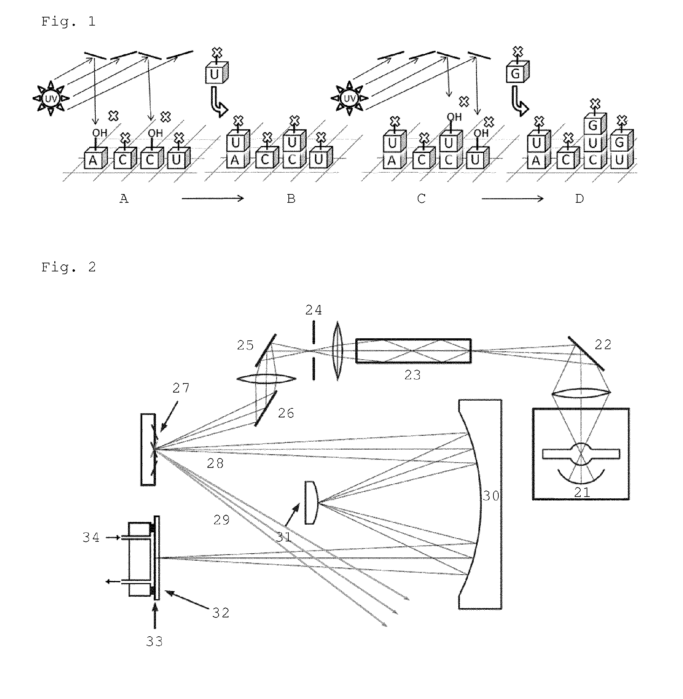

There are currently four dominant forms of light-directed synthesis. (1) The original invention by Affymetrix relies on the use of the MeNPOC light-sensitive group on the 5-hydroxyl group of DNA phosphoramidites. The microarrays are synthesized on glass substrates, which are covered with metal masks, similar to photolithographic masks. Holes in the masks allow light to reach predetermined areas of the glass substrate, where the chemical reactions occur leading to DNA synthesis. A method for in situ synthesis of probes of a microarray using a mask set is disclosed in US 7,844,940 B2. (2) In a refined method the metal masks were replaced by an optical system incorporating an array of micromirrors. In addition to changing the method to deliver light, the chemistry was improved by using the NPPOC light-sensitive group, which photochemical and photophysical characteristics enable more efficient synthesis. The micromirrors can be tilted to direct light to the synthesis surface. Maskless optical micromirror-based microarray synthesis is described in US 8,030,477 B2 and in WO 99/63385 A1. Fig. 1 illustrates a micromirror imaging and synthesis method and Fig. 2 shows a micromirror imaging device for reference. (3) An alternative to physical masks and mirror arrays is the use of a laser system to direct light to the appropriate part of the synthesis surface. (4) The fourth method uses a distinctly different synthesis chemistry: light is used to generate an acidic environment via the use of photo-acids, and the photo-acids cleave acid-labile 5'-hydroxyl groups from the appropriate DNA phosphoramidites.

Further improvements have been made to improve synthesis quality. US 2007/0037274 A1 provides an improved optical system to generate microarrays comprising a flow cell with optimized materials and fluids with similar refractive indices to reduce undesired reflections.

A review on microarray synthesis apparatuses, materials and methods is provided in Agbavwe et al., Journal of Nanobiotechnology, 9:57, 2011.

Although microarray synthesis has been optimized since the first conception, it remains an expensive process, which limits the potential practical applications of microarray technology It is therefore a goal of the present invention to provide a convenient and economical process for synthesizing microarrays to reduce costs per created microarray.

This goal has been solved by the present invention, which provides a method and means, in particular a flow cell, that allows the parallel synthesis of more than one microarray simultaneously with little modifications in the synthesis apparatus.

The invention provides a method of step-wise synthesizing copies of polymers of potentially different units on at least two solid carrier surfaces simultaneously in a preselected pattern, comprising
i) providing a layered synthesis arrangement comprising a transparent first solid carrier and a second solid carrier, wherein said first and second carrier each contain a surface to which polymer units can be applied depending on reactions of photosensitive moieties,
ii) projecting light in a preselected pattern onto the first carrier surface, whereby photons react with the photosensitive moieties thereby activating the first surface, wherein the light substantially passes through the transparent first solid carrier and further projects onto the second carrier surface, whereby photons react with the photosensitive moieties thereby activating the second surface,
iii) applying a fluid comprising a polymer unit to the first and second active surfaces and binding the polymer unit to the exposed sites of said pattern,
iv) repeating steps ii) and iii) with optionally different patterns and/or polymer units, thereby synthesising polymers on said carrier surfaces.

In a related aspect, the invention provides a flow cell for synthesizing copies of polymers of potentially different units on at least two solid carrier surfaces simultaneously in a preselected pattern, comprising
a layer of a transparent first solid carrier,
a layer of a second solid carrier,
wherein said first and second carrier each contain an active surface to which polymer units can be applied comprising photosensitive or chemically-labile moieties,
a fluid gap in contact with said first and second active surface,
wherein said gap contains a fluid inlet and a fluid outlet.

Further provided is a kit comprising the flow cell and a container comprising polymer units, preferably modified by a photosensitive moiety.

The present invention is further defined as in the claims. Preferred embodiments of the present invention are further described herein in the following and relate to the inventive method and flow cell and kit equally, wherein the flow cell or kit can be suitable for performing said method steps, e.g. being adapted for the method steps or by comprising means to perform said method steps. The flow cell or kit can be used in the course of the inventive methods. Each of the preferred features or embodiments can be combined with each other in especially preferred embodiments except in cases of exclusive alternatives.

The term "microarray" is used in the art as either an arrangement or as a solid substrate. Both expressions apply to the present invention, which provides a solid surface with such an arrangement. Usually herein "microarray" refers to the solid surface with a pattern of multiple immobilized polymer molecules thereon. The carrier surface is also referred to a substrate herein.

The innovation is to modify the flow cell to synthesize multiple microarrays, especially two microarrays, simultaneously. Surprisingly is has been found that focal depth of focused light is sufficient to illuminate more than one parallel surface and it is still possible to provide suitable fluidic systems that can provide fluid flow onto the active surfaces in a gap or channel with a width sufficiently within an adequate focal depth range. This modification is possible because very little light is absorbed and lost in the synthesis process. Several layers of support carriers (e.g. 2, 3, 4 or more) can be stacked and illuminated by the same light beam. Stacking can be performed in any order.

A further requisite to light illumination is contacting with the fluids comprising the synthesizing units that shall be attached to the surfaces. In principle it is possible to contact each layer sequentially or in parallel, with the same fluid or different fluids. Since only a small quantity of the units in a fluid are adsorbed to the surfaces in the binding reaction, the fluid can pass various surfaces sequentially, e.g. through several flow channels. Of course, the larger the total channel volume, the greater the amount of required chemicals will be. Therefore is also a goal to minimize the gap or channel distance. When using thinner gaps or channels, problems with the fluidics system may arise. Usually the fluid inlet for the fluids, e.g. a tube port, is wider in diameter than the gap distance. If the fluid inlet is within the gap, e.g. in the seal or gasket of the gap, flow turbulences may occur due to changing fluid flow rates dependent on the narrowing to the gap dimension (in comparison to the wider tube). Therefore in a preferred embodiment an opening for a fluid inlet and/or outlet of the fluid for contacting the first and second surface is within one of the carriers itself. E.g. the first and/or second carrier may contain holes with openings for the fluid inlet and/or outlet. The holes in the support can be in any size and can be made to fit the tubes. The inlet and/or outlet may have a diameter of 250 µm to 6 mm, preferably of 500 µm to 4 mm, of 800 µm to 3 mm or of 1 mm to 2 mm.

It is preferred to use a single channel in order to minimize reagent loss and requirement. Thus, in a preferred embodiment of the invention, in step iii) the fluid is passed through a single channel or gap between the layers of the carrier surfaces, wherein said first and second surfaces face said channel or gap on opposing sides. It is e.g. possible to use the top and the bottom wall of the fluid channel as surfaces for synthesis. If a second synthesis surface is as the backside of the synthesis flow cell, the same array is synthesized on both substrates, the only difference between the two arrays is that they are mirror images of each other. The mirror image layout of the second array does not limit its use in any way. After hybridization (or other applications of the microarray) and scanning the microarrays with a microarray scanner, the images can be rotated and flipped in an image editor (e.g. Photoshop) to have the same orientation. Because the two arrays are synthesized simultaneously with the same chemical reagents and light exposure, they are as similar as two microarrays can be, and therefore may have additional utility as matched pairs for experiments that would benefit from very close data comparisons. Thus, in preferred embodiments of the invention the pattern is displayed on the first surface as a mirror image of the pattern as displayed on the second surface. Since the synthesis time, equipment and reagents are shared between the two arrays, the synthesis cost and time of the second array are greatly reduced. Thus, in a further aspect of the invention a set of two microarrays is provided, with each microarray comprising immobilized polymers in a preselected pattern, wherein the patterns of the two microarrays are mirror-images to each other.

The gap or channel in the flow cell is preferably secured by a seal or gasket. Thus, in preferred embodiments of the flow cell, it further comprises a seal or gasket between said first and second layer of carriers, which creates a gap between the carriers. The primary additional cost is the second microarray substrate and a single-use gasket creating the seal between the two microarrays. In preferred embodiments, the fluid inlets and/or outlets are not in the seal or gasket, but in a solid carrier in an area enclosed by the seal.

Because the microarrays are directed optically, the two surfaces where the microarrays are synthesized need to be separated by a gap within or not greatly exceeding the focal depth of the focal plane of the optical system. In addition, the gap between the two surfaces needs to be small in order to minimize the consumption of the solvents and reagents used in the synthesis. Both of these requirements can be met simultaneously by using a gap of limited dimensions. In preferred embodiments the layer distance between the first and second surface layer is at most 2 mm or at most 1.5 mm, preferably at most 1 mm, especially preferred at most 800 µm or at most 500 µm, even more preferred at most 250 µm, most preferred at most 150 µm or at most 100 µm. The precise optimum gap size is determined by the specific characteristics of the system. A smaller gap is preferred due to a lowering of the consumption of the solvents and reagents, as well as decreasing the requirements of depth-of-focus of the optical system. Smaller gaps are more difficult to engineer due to the thinness of the required gasket and the higher pressures necessary to pump solvents and reagents through the narrower gap.

The first carrier is transparent in the meaning that the light used in the inventive method substantially passes through said carrier material to cause photoreactions with the photoreactive moieties or compounds in the vicinity of the first and second carrier surface. A transparent carrier means one that allows passage of light in sufficient amounts in order to cause photoreactions on the second surface or in the fluid to cause a chemical reaction depending on light incidence on the second surface. Transparency can mean that at least 30%, preferably at least 40%, at least 50%, at least 60%, at least 70%, at least 80%, or at least 90% of incident light to pass through. Preferably, also the second carrier is transparent. In addition, it is possible to place the carrier arrangement onto a block, which preferably is also transparent. Transparent materials help to minimize heating by light absorption. In especially preferred embodiments the space between such a block and the closest carrier, e.g. the second carrier, contains an anti-reflective material, e.g. a fluid with a similar refractory index as the transparent material, to minimize light scattering. Such a system is e.g. disclosed in US 2007/0037274 A1 (incorporated herein by reference). A suitable transparent material for the first and/or second carrier is glass, plastic or any other suitable microarray substrate. Preferably the block is of metal or glass, especially preferably the block is chemically resistant and transparent in the near ultraviolet and visible wavelengths, such as glass, quartz, fused silica or sapphire. Further materials for the carriers and/or block are disclosed in US 6,329,143, US 6,310,189; US 6,309,831; US 6,197,506; and US 5,744,305, all of which are hereby incorporated by reference. For instance, the carriers may be a polymerized Langmuir Blodgett film, functionalized glass, Si, Ge, GaAs, GaP, SiO₂, SiN₄, modified silicon, or any one of a wide variety of gels or polymers such as (poly)tetrafluoroethylene, (poly)vinylidenedifluoride, polystyrene, polycarbonate, or combinations thereof. Other carrier materials will be readily apparent to those of skill in the art upon review of this disclosure. In a preferred embodiment the substrate is flat glass or single-crystal silicon. The carrier surface is preferably flat, especially at the level of 1 µm, especially preferred of 100 nm, 10 nm or 1 nm.

Without an index-matching and absorbing fluid, the best possibility to reduce reflected light is to use an antireflective coating on the back side of the transparent block. These coatings usually reduce the reflection from about 4% to about 1% of the incident light. This one percent light reflected back is currently the largest source of error in light-directed synthesis of microarrays. Preferably an absorbing fluid is provided between the block and the closest carrier, e.g. the second carrier. An absorbing fluid can reduce the reflected light to approximately zero.

Preferably the light pattern used for activating the surfaces is generated by an array of selectively tiltable micromirrors reflecting light in the preselected pattern dependent on the tilt of each mirror. A micromirror system is disclosed in Agbavwe et al (supra) and in US 8,030,477 B2 and in WO 99/63385 A1 (all incorporated herein by reference) and can be used according to the invention. Lenses or curved mirrors can be positioned between the light source and the micromirror, which can be a micromirror array, or between the micromirror and the substrate.

It is further possible to generate said pattern by a mask comprising holes according to the preselected pattern. A system using light masks is disclosed in US 7,844,940 B2 (incorporated herein by reference) which can be used according to the invention. A mask can be a solid mask, which a can be used in an array of masks to create different patterns or a alternatively, the mask can have fields than can be switched between transparent and blocking modes, such as an array of liquid crystals as are commonly used in LCDs.

It is further possible to generate said pattern with a laser as disclosed in US 2005/0079601 A1 (incorporated herein by reference). The laser can be used to sequentially illuminate spots of the pattern. Alternatively it is possible to use an array of lasers, wherein by activating and inactivating certain lasers creates the pattern. Furthermore it is possible to use an array of light emitting diodes similarly to an array of lasers.

The pattern is preferably a 2D pattern. Spots can be arranged in rows and columns in a preselected way, wherein each spot has bound a potentially different polymer as is synthesized according to the present invention.

The pattern may comprise or consist of spots. A single or each spot displayed onto the first and/or second surface may have a size of 5 µm to 3 mm, preferably of 10 µm to 2 mm, 15 µm to 1 mm, 25 µm to 800 µm, 40 µm to 600 µm, 50 µm to 400 µm or 60 µm to 200 µm.

The projected light can be light of multiple wave-lengths, e.g. light of a lamp, or monochromatic light, e.g. of a laser or light emitting diode. The light can be visible light or ultraviolet light, i.e. in the wavelength ranges of 200 nm to 400 nm or 400 nm to 800 nm or a combination thereof, i.e. of 200 nm to 800 nm. Further preferred wavelength ranges are from 200 nm to 300 nm, 300 nm to 400 nm, 400 nm to 500 nm, 500 nm to 600 nm, 600 nm to 700 nm or 700 nm to 800 nm or combinations thereof, especially preferred is the combination of 300 nm to 500 nm. Suitable lamps or other light sources can be selected by a skilled artisan, depending on the reactivity of the photosensitive moiety used. An example lamp is a Hg lamp. In preferred embodiments, the light is within or encompasses the wavelength range of 350 nm to 450 nm. Preferably the light has a bandwidth of 50 nm to 600 nm, preferably of 80 nm to 400 nm or 100 nm to 200 nm within the above mentioned wavelength ranges. It is also possible to use light with narrower bandwidths, such as lasers or light emitting diodes. E.g. the bandwidth can be from 1 nm to 50 nm, preferably 5 nm to 40 nm or 10 nm to 30 nm.

Preferably the light can be focused. To this end a light guide, e.g. a mirror or set of mirrors, or lenses can be used. Preferably the inventive method comprises focusing the light with a focus point between said first and second carrier surface. Preferably the focal point is in the middle third of the distance between the first and second surface. The light guide of the flow cell is preferably suitable for such focusing. Alternatively, spatially coherent light such as a laser light can be used.

The flow cell may e.g. comprise a light guide for projecting light though said first solid carrier onto the second solid carrier, preferably focusing the light with a focus point between said first and second carrier surface.

The light can catalyze a chemical reaction on the surfaces, e.g. an amino acid addition reaction or the addition, removal or crosslinking of organic or inorganic molecules or compounds, small or large. For example, during the addition of a nucleic or an amino acid residue, the light can deprotect the units comprising photosensitive moieties as protecting groups, e.g. phosphoramidite containing compounds. Therefore, in a preferred embodiment, the units as used in the inventive method or as provided in the kit can comprise photosensitive moieties preventing a binding reaction of further units to said units until exposed to said projected light. According to the embodiment step ii) can also be defined as projecting light in a preselected pattern onto the first carrier surface, thereby activating photosensitive moieties on the first surface, wherein the light passes through the transparent first solid carrier, and further projects onto the second carrier surface, thereby activating photosensitive moieties on the second surface. However the photosensitive moieties are not required to be bound to the surface. They can be provided in a fluid, not bound to the unit or surface. Unbound photosensitive moieties are in the following referred to as photosensitive compound. Alternatively, it is also possible to use or provide units comprising or chemically-labile groups preventing a binding reaction of further units until removed by an activated photosensitive compound. Suitable pairs of labile moieties and photosensitive compounds, which do not need to be bound to the units or the surface, exist in the art. An example is an acid sensitive group on the units as labile moiety and a photoacid as photosensitive compound, which reacts with a photon and creates an acid microenvironment upon radiation in the vicinity of the radiation, and in turn near a spot on a microarray that comprises the bound labile unit, which in turn becomes reactive to bind a further unit.

Suitable polymer units may comprise a nucleoside for synthesis of nucleic acid polymers or amino acids for synthesis of polypeptides. Polymer units may be naturally-occurring molecules or synthetic derivatives thereof. The units as used herein may refer to monomer units or preconnected conjugated monomers, e.g. dimers, trimmers, etc. Possible units are nucleosides, nucleotides or conjugated nucleic acids, including 1-mer, 2-mer, 3-mer, 4-mer, 5-mer, 6-mer or longer preprepared chains. Units can also be single amino acids, or dipeptides, tripeptides, etc. that are bond to the surface in this state. Nucleotide units can be selected from A, G, T, C, or U, and derivatives thereof, such as methylated C. Nucleotides are preferably DNA, RNA or LNA. Amino acids can be selected from Ala, Arg, Asn, Asp, Cys, Glu, Gln, Gly, His, Ile, Leu, Lys, Met, Phe, Pro, Ser, Thr, Trp, Tyr, Val or any combination thereof, and derivatives thereof such as selenocysteine. Methods for protein microarray synthesis are e.g. detailed in WO 2012/126788 A1 (incorporated herein by reference).

The incentive method steps of sequentially ligating or binding units to the surface is preferably repeated until a polymer of the desired length and sequence, optionally on each spot, is created. A polymer can be composed of two or more covalently bonded monomers or units, and its molecular weight may be approximately 1,000 or less. The polymer may include approximately 2 through 500 monomers or units. More specifically, the polymer may include approximately 5 through 30 monomers or units.

Light can also be used for the crosslinking or mono-, bi-, or multi-functional binding groups or compounds to attach molecules such as fluorochromes, antibodies, carbohydrates, lectins, lipids, and the like, to the substrate surface or to molecules previously or concurrently attached to the substrate.

Preferred photosensitive moieties that undergo a chemical reaction upon light exposure are phosphoramidites, such as NPPOC, as used in the art. The preferred light dependent reaction is a deprotection of a chemical moiety on the unit that can then be conjugated with a further unit.

The last step in microarray synthesis may be an overall deprotection to remove all remaining protection steps without further adding additional units.

The first step in microarray synthesis may be attaching a first unit onto the carrier surface that contains reactive chemical groups for linkage with the units. Said chemical groups may be protected with a photosensitive moiety or chemically-labile moiety, which can be removed by action of light on a photosensitive compound, which in turn removes the chemically-labile moiety once activated by light, such as photoacids which act on acid sensitive moieties. Chemical groups may be any form of organic linker molecules such as C1-C30 linkers or any one of the above monomers such as nucleic acids or proteins, in particular poly(X)-chains wherein X is a nucleotide selected from A, T, C, G, U, preferably T. The chain may have any length, preferably 1 to 20 nucleotides or other monomers in length.

The invention further relates to a kit comprising the flow cell and a container comprising polymer units. Said polymer units can be any one as defined above, e.g. nucleotides or amino acids. The units are preferably modified by a photosensitive moiety or by chemically-labile moiety. The photosensitive moiety or the chemically-labile moiety can be removed by light to expose reactive sites on the units for further polymer synthesis as described above. In the kit, the units can be provided in dry form or in a fluid, e.g. an aqueous fluid. The kit may comprise different containers for different units, such as nucleotides selected from A, G, T, C, or U, or any amino acid, e.g. selected from Ala, Arg, Asn, Asp, Cys, Glu, Gln, Gly, His, Ile, Leu, Lys, Met, Phe, Pro, Ser, Thr, Trp, Tyr, Val or any combination thereof, or derivatives thereof as described above. The kit preferably comprises 1, 2, 3, 4, 5, 6, 7, 8, 9, 10 or more different units, preferably from the ones listed above.

Microarrays according to the invention can be used as is known in the art. They can be used in nucleotide binding assays, such expression assays, e.g. to determine miRNA or mRNA in a sample, or in peptide recognition assays, e.g. the determine antibodies in a sample. Especially preferred are differential assays. In differential or comparative assays two microarrays are contacted with different samples, e.g. one sample of interest and one control sample. The inventive microarrays are particularly beneficial for use in differential assays especially when using a pair of microarrays that have been generated simultaneously as described herein. Simultaneously generated microarrays are near identical (except for being optionally mirror images), with minimal variance. The use of such a simultaneously generated set of microarrays minimizes background signals and improves comparative assays in sensitivity in detecting differences between the two samples. Preferably the inventive kit or flow cell comprises a set of at least two microarrays, wherein at least two microarrays are mirror images to each other and/or have been generated simultaneously according to the inventive method. Related thereto, the invention also provides the final product of the inventive method in a kit, in particular a kit comprising at least two microarrays with immobilized polymers in a preselected pattern, wherein the patterns of at least two microarrays are mirror image of each other and/or wherein the at least two microarrays have been produced simultaneously in the inventive method. This kit with at least two microarrays can be used as describe, especially for differential or comparative assays.

The inventive microarrays may comprise at least 2, 3, 4, 5, 6, 7, 8, 9, 10, 11, 12, 13, 14, 15, 16, 17, 18, 19, 20 or more different polymers. The polymers may be arranged in a 2D pattern comprising, e.g. comprising rows and columns, e.g. a pattern of at least 2x2, at least 3x3 or at least 4x4 spots. Especially in 2D patterns, the mirror-image pattern of one of the at least two microarrays is non-identical with the pattern of the other of the at least two microarrays. In 1D patterns, the mirror-image pattern of one of the at least two microarrays may be identical or non-identical with the pattern of the other of the at least two microarrays. Preferred is a at least a pair of non-identical mirror-imaged microarrays.

The present invention is further described in the figures and following examples, without being limited to these embodiments of the invention.

### Figures:

Fig. 1: Array layout determination in Maskless Array Synthesis as is known in the art. Two simplified cycles, a uracil (U) coupling followed by a guanine (G) coupling illustrate *in situ* synthesis of the microarray. Step A: First, micromirrors corresponding to a desired coupling of uracil to the first and third positions are tilted to reflect UV light onto the chosen positions. The UV light cleaves the photosensitive 5' protecting groups (e.g. NPPOC) from the ends of RNA strands at these positions, exposing terminal hydroxyl groups. Step B: After UV exposure is over, the uracil phosphoramidite is introduced into the reaction flow cell and couples to these hydroxyl groups. Step C: A subsequent coupling of guanine is initiated by directing micromirrors to illuminate the third and fourth microarray positions. Step D: After exposure, the guanine phosphoramidite is introduced and couples, extending the RNA sequences at positions three and four. Oxidation and capping steps are not shown here.
Fig. 2: Schematic of the optical layout for Maskless Array Synthesis (MAS) as is known in the art. UV light from a Mercury lamp 21 is spatially homogenized in a light-pipe in order to evenly illuminate all of the micromirrors of the DMD. The light pattern displayed on the micromirrors is imaged onto the back side of a glass slide via an Offner relay 1:1 projection system consisting of primary and secondary spherical mirrors. A flow cell holds the glass slide at the image plane and directs reagents to the reaction surface where the microarray is synthesized. 21: Hg Lamp; 22: dichroic mirror; 23: light pipe; 24: shutter; 25: folding mirror 1; 26: folding mirror 2; 27: micromirrors; 28: on-ray; 29: off-ray: 30: primary spherical mirror; 31: secondary spherical mirror; 32: glass slide; 33: image plane; 34: fluid from DNA synthesizer;

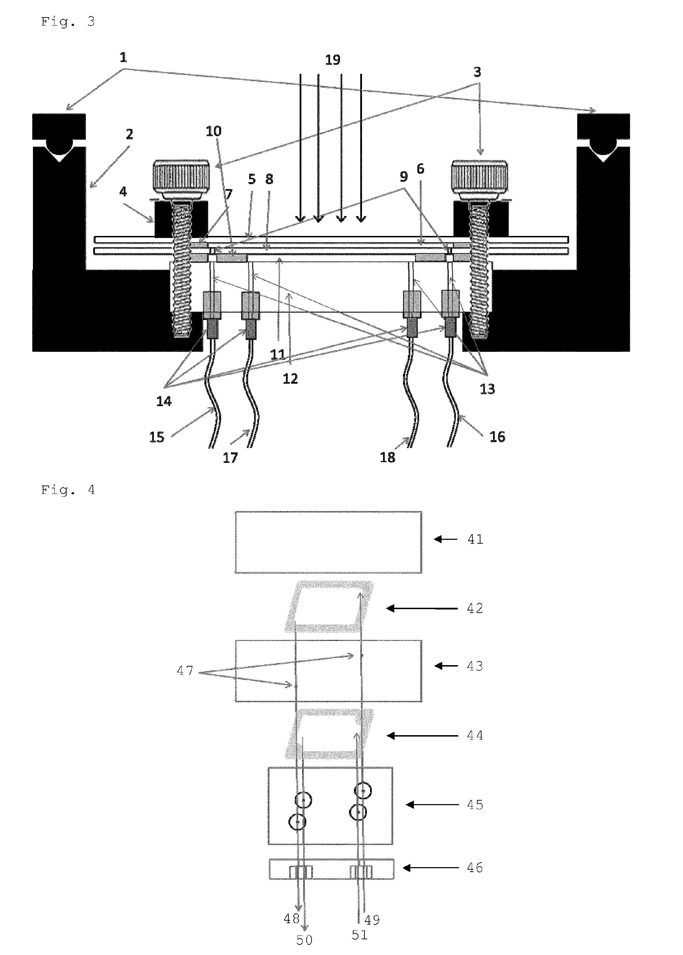

Fig. 3: Cross section schematic of synthesis cell for simultaneous synthesis of mirror image arrays. **1:** Alignment points to optical system. **2:** Metal base used to hold parts together and in alignment with optical system. **3:** Screws used to hold synthesis cell together and attach synthesis cell to the metal base. **4:** Metal frame used to distribute screw pressure. **5:** First microarray substrate. **6:** Chamber between first and second substrates; chamber is where the solvents and reagents flow and the synthesis chemistry takes place. **7:** Gasket between first and second substrates. **8:** Second microarray substrate. **9:** Two holes in second substrate, inlet and outlet for solvents and reagents. **10:** Bottom gasket. **11:** Chamber between second microarray substrate and synthesis block. **12:** Synthesis block. **13:** Hole through synthesis block for introduction of solvents and reagents into synthesis chamber and lower chamber. **14:** Port connections between synthesis block and delivery and waste tubing. **15:** Inlet tubing to reaction chamber. **16:** Outlet tubing from reaction chambers. **17:** Inlet tubing to lower chamber. **18:** Outlet tubing from lower chamber. **19:** Incident light from optical system.
Fig. 4: Assembly of microarray substrates and gaskets onto synthesis block. **41:** first glass substrate; **42:** top gasket; **43:** second glass substrate; **44:** bottom gasket; **45:** bottom block; **46:** side view of bottom block; **47:** two holes in second glass substrate; **48:** top chamber outlet; **49:** top chamber inlet; **50:** bottom chamber outlet; **51:** bottom chamber inlet.

### Example:

A flow cell for microarray synthesis has been manufactured as shown in Fig. 3 and 4. In this system, a gasket between microarray surfaces provided by the first and second substrates, respectively provides the gap for the chemical synthesis fluid. The gasket has been cut (with a laser cutter) from unsintered, skived Teflon tape and has a thickness of ∼80 µm. This material is commonly used in plumbing and is therefore very inexpensive and readily available. At a ±40 µm distance from the optimal focal position, the image formed on each of the two microarray substrates is only slightly out of focus, with features of 1 µm still resolvable with a microscope. Since most microarray scanners have maximum resolutions in the range of 2 to 5 µm, the deviation from optimal focus affects neither the synthesis of the microarray nor the subsequent use of the microarray. The gasket (bottom gasket) between the second microarray substrate and the quartz block, with the two holes as shown in Fig. 4 is made from a perfluoroelastomer (Chemraz) with a thickness of 250 µm and has also been cut with a laser cutting machine. The exact thickness of this gasket is not important, but this thickness is sufficient to make these gaskets strong enough to be reusable.

The fluid inlets and outlets into the chamber between the first and second substrate have a diameter of 1 mm. These inlets and outlets provided as holed drilled into the second substrate. These holes are sufficiently separated from the microarrays so as not interfere with microarray synthesis or use. In preliminary experiments it has been shown that it is not practical to introduce inlet and outlet flows through the gasket material since inlet and outlet openings of sufficiently small diameter to enter the chamber through the narrow gap distance between the microarray substrate cannot transport a sufficient volume of reagents to effectively fill or drain the chamber, nor to provide the necessary homogenous flow of solvents and reagents across the substrate surfaces.

Fig. 3 shows a cross section schematic of a synthesis flow cell for simultaneous synthesis of two mirror-image microarrays.

Fig. 4 shows an exploded view for the synthesis block (item 12 in Fig. 3). This part provides the flat surface onto which the microarray substrates are attached, as well as the fluidics connections for delivery of solvents and reagents. The principle advantage of quartz is that, being transparent, it allows most of the light to exit rather than be absorbed and converted to heat. The transparency also allows for easy optical monitoring of flow in the synthesis cell. Finally, the chamber created between the synthesis block and the second substrate (item 11 in Fig. 3) can be filled with a fluid that matches the index of refraction of a glass microarray substrate and the quartz synthesis block. The index matching fluid (typically DMSO) is introduced into this space via two of the four holes in the block. The index matching fluid prevents reflections at the back surface of the lower microarray substrate, reducing synthesis errors due to stray reflected light. The index matching fluid can also be made to absorb part or all of the light exiting the reaction chamber by dissolving appropriate absorbing molecules in the fluid. These molecules are chosen to absorb between 350 and 450 nm and to either fluoresce at wavelengths greater than 450 nm (where the NPPOC group does not absorb light) or to quench the absorbed light. This additional absorbing step further reduces the possibility of stray light introducing synthesis errors. In certain applications requiring very high accuracy, such as assembly of genes from microarray-synthesized DNA oligonucleotides, the error reduction from reduced stray light is highly beneficial.

For nucleotide synthesis on the substrates reference is made to Fig. 1. Sequentially, light patterned spots were bound with monomers in repeated cycles as is known in the art and summarized in Agbavwe et al. (supra) using the phosphoramidite technology, especially NPPOC as photosensitive protecting group on the 5' position of individual nucleotides. For patterning, a micromirror device as shown in Fig. 2 was used.

## Claims

1. A method of step-wise synthesizing copies of polymers of potentially different units on at least two solid carrier surfaces simultaneously in a preselected pattern, comprising the steps of
i) providing a layered synthesis arrangement comprising a transparent first solid carrier and a second solid carrier, wherein said first and second carrier each contain a surface to which polymer units can be applied depending on reactions of photosensitive moieties,
ii) projecting light in a preselected pattern onto the first carrier surface, whereby photons react with photosensitive moieties thereby activating the first surface, wherein the light passes through the transparent first solid carrier, and further projects onto the second carrier surface, whereby photons react with photosensitive moieties thereby activating the second surface,
iii) applying a fluid comprising a polymer unit to the first and second active surfaces and binding the polymer unit to the exposed sites of said pattern,
iv) repeating steps ii) and iii) with optionally different patterns and/or polymer units, thereby synthesising polymers on said carrier surfaces.

2. The method of claim 1, **characterized in that** in step iii) the fluid is passed through a single channel or gap between the layers of the carrier surfaces, wherein said first and second surfaces face said channel or gap on opposing sides.

3. The method of claim 1 or 2, **characterized in that** the pattern is displayed on the first surface as a mirror image of the pattern as displayed on the second surface.

4. The method of any one of claims 1 to 3, **characterized in that** said pattern is generated by an array of selectively tiltable micromirrors reflecting light in the preselected pattern dependent on the tilt of each mirror; or wherein said pattern is generated by a mask comprising holes according to the preselected pattern.

5. The method of any one of claims 1 to 4, **characterized in that** a solid carrier contains an opening for a fluid inlet and/or outlet.

6. The method of any one of claims 1 to 5, **characterized in that** said projected light is light of multiple wave-lengths or monochromatic light.

7. The method of any one of claims 1 to 6, **characterized in that** the layer distance between the first and second surface layer is at most 500 µm, preferably at most 250 µm, more preferred at most 150 µm or at most 100 µm.

8. The method of any one of claims 1 to 7, **characterized in that** the pattern consists of spots, a spot displayed onto the first and/or second surface having a size of 5 µm to 3 mm, preferably of 10 µm to 2 mm, 15 µm to 1 mm, 25 µm to 800 µm, 40 µm to 600 µm, 50 µm to 400 µm or 60 µm to 200 µm.

9. The method of any one of claims 1 to 8, **characterized in that** said units comprise photosensitive moieties preventing a binding reaction of further units to said units until exposed to said projected light or wherein said units comprise labile groups preventing a binding reaction of further units until removed by an activated photosensitive compound, preferably wherein said labile group is an acid sensitive group and wherein said photosensitive compound is a photoacid.

10. The method of any one of claims 1 to 9, **characterized in that** the units comprise nucleoside for synthesis of nucleic acid polymers or amino acids for synthesis of polypeptides.

11. A flow cell for synthesizing copies of polymers of potentially different units on at least two solid carrier surfaces simultaneously in a preselected pattern, comprising a layer of a transparent first solid carrier,
a layer of a second solid carrier,
wherein said first and second carrier each contain an active surface to which polymer units can be applied comprising photosensitive or chemically-labile moieties,
a fluid gap in contact with said first and second active surface,
wherein said gap contains a fluid inlet and a fluid outlet.

12. The flow cell according to claim 11, further comprising a seal between said first and second layer of carriers.

13. The flow cell according to claim 11 or 12, further comprising a light guide for projecting light though said first solid carrier onto the second solid carrier, preferably focusing the light with a focus point between said first and second carrier surface.

14. A kit comprising a flow cell according to any one of claims 10 to 13 and a container comprising polymer units, preferably modified by a photosensitive or chemically-labile moiety.

15. The flow cell or kit according to claims 11 to 14 adapted for performing a method of any one of claims 1 to 10.

16. A kit comprising at least two microarrays with immobilized polymers in a preselected pattern, wherein the patterns of at least two microarrays are mirror image of each other and/or wherein the at least two microarrays have been produced simultaneously in a method according to any one of claims 1 to 10.
